(19) Europäisches Patentamt
European Patent Office
Office européen des brevets

(11) Numéro de publication: **0 026 685**
**B1**

# (12) FASCICULE DE BREVET EUROPEEN

(45) Date de publication du fascicule du brevet: **12.03.86**

(51) Int. Cl.⁴: **C 01 B 21/097**, C 08 G 79/02

(21) Numéro de dépôt: **80401248.2**

(22) Date de dépôt: **02.09.80**

(54) **Polychlorophosphazènes linéaires, procédé pour leur préparation et leur utilisation.**

(30) Priorité: **27.09.79 FR 7924037**

(43) Date de publication de la demande: **08.04.81 Bulletin 81/14**

(45) Mention de la délivrance du brevet: **12.03.86 Bulletin 86/11**

(84) Etats contractants désignés: **CH DE FR GB IT LI NL SE**

(56) Documents cités:
**CHEMICAL ABSTRACTS, vol. 64, no. 8, 11-04-1966 abrégé 11397d Columbus, Ohio, US L. YA: "Poly(phosphonitrile chlorides)"**

(73) Titulaire: **Association dite: INSTITUT MONDIAL DU PHOSPHATE, Boulevard de la Grande Ceinture Route d'El Jadida, Casablanca (MA)**

(72) Inventeur: **De Jaeger, Roger, 8, rue des Buissons, Gruson F-59152 Chereng (FR)**
Inventeur: **Helioui, Moncef, 4/210 Rue du Barreau, F-59650 Villeneuve d'Ascq (FR)**
Inventeur: **Puskaric, Emile, 5, rue Pasteur, F-59710 Pont-à-Marcq (FR)**

(74) Mandataire: **Ores, Irène et al, CABINET ORES 6, Avenue de Messine, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention est relative à de nouveaux polychlorophosphazènes linéaires et à leur procédé de préparation.

De nombreuses publications décrivent la préparation de polychlorophosphazènes cycliques qui est relativement facile à réaliser, étant donné la tendance des composés inférieurs de la série des chlorophosphazènes à se cycliser. Il s'est toutefois avéré que les polychlorophosphazènes linéaires présentent un intérêt économique considérablement plus grand que les polychlorophosphazènes cycliques, en raison de l'étendue de leurs possibilités d'applications, en tant que matériaux ayant des applications très étendues et très diverses du type de celles des silicones, des matières plastiques et des élastomères naturels ou synthétiques, en tant que matériaux antiflamme et anticombustion ou additifs conférant des propriétés antiflamme et anticombustion aux matériaux et substances auxquels ils sont ajoutés, en tant que revêtements, en particulier revêtements étanches, dans le domaine biomédical, comme fertilisants, ou comme lubrifiants, notamment. En outre, certains élastomères obtenus par diverses substitutions sur des polychlorophosphazènes linéaires se sont avérés présenter une excellente tenue aux basses températures, ainsi que vis-à-vis de réactifs corrosifs. L'application majeure de polychlorophosphazènes est représentée par le fait que ces derniers constituent le point de départ optimal pour l'obtention de polyorganophosphazènes, qui sont des polymères présentant des propriétés remarquables.

Quelques procédés de préparation de polychlorophosphazènes linéaires ont été proposés conformément à l'Art antérieur. C'est ainsi que L.G. LUND, N.L. PADDOCK, J.E. PROCTOR et H.T. SEARKE [J. Chem. Soc. London, p. 2542, 1960], ont décrit l'obtention de polychlorophosphazènes suivant le schéma réactionnel ci-après:

$$PCl_5 + NH_4Cl \rightarrow \frac{1}{n}(PNCl_2)_n + 4\ HCl,$$

dans le tétrachloroéthane symétrique comme solvant. Toutefois, ce schéma implique un grand nombre d'étapes réactionnelles et constitue un procédé long et onéreux, car le produit brut auquel il donne lieu est un mélange de composés cycliques, présents à raison de 90% et de composés linéaires de type $PCl_5\ (PNCl_2)_n$ où n n'excède pas 20 dans une proportion de 10%.

Pour obtenir des polymères linéaires plus longs, les composés cycliques sont alors traités par des solvants, pour séparer le trimère et le tétramère dont on extrait, à l'aide de solvants appropriés, le $(NPCl_2)_3$ pur qui est soumis à une polymérisation thermique sous pression réduite à une température de 250 °C pendant deux jours, pour donner un polymère $(PNCl_2)_n$ linéaire avec un taux de conversion optimum de 70% (H.R. ALLCOCK, R.L. KUGEL, K.J. VALAN – Inorg. Chem. 1966, 5, 1709).

D'autre part, BECKE-GOEHRING et LEHR [Z. Anorg. all. Chem. 1963, 325, p. 287], ont préparé le dichlorophosphorylpentachlorodiphosphazène $Cl_2(O)P–(N=PCl_2)–_2Cl$ par réaction de $SO_2$ sur le composé ionique $[Cl_3P=N–PCl_2=N–PCl_3]PCl_6$ obtenu par réaction du pentachlorure de phosphore avec le chlorure d'ammonium dans un solvant à faible constante diélectrique: il n'a cependant pas été possible à ces Auteurs d'obtenir des homologues supérieurs dans lesquels $n > 2$, en raison de la formation de polychlorophosphazènes cycliques par poursuite de la réaction du composé ionique avec du chlorure d'ammonium. KIREJEW et Coll. [Z. obsc. Chim. URSS, 42 (104), 510, (1972)] ont, par ailleurs, décrit la préparation du dichlorophosphorylheptachlorotriphosphazène $Cl_2(O)P–(N=PCl_2)–_3Cl$ par coupure du noyau de l'hexachlorocyclotriphosphazène à l'aide de $PCl_5$ et réaction du produit de la coupure avec du $SO_2$. D'autre part, RIESEL et SOMIESKI [Z. anorg. allg. Chem. 411, p. 148–152 (1975)] ont proposé de synthétiser les premiers membres de la série des phosphorylchlorophosphazènes linéaires par allongement pas-à-pas de la chaîne P–N–P en faisant réagir successivement le $POCl_3$ ou des phosphorylchlorophosphazènes à chaîne courte, avec de l'hexaméthyldisilazane et du pentachlorure de phosphore. Toutefois, ils ne sont pas parvenus à aller au-delà du triphosphazène de formule $Cl_2(O)P–(N=PCl_2)–_3Cl$ qui, au demeurant, est un composé instable qui se décompose par chauffage au-dessus de 100 °C, avec libération de $POCl_3$ et formation de hauts polymères $[PNCl_2]_n$ et d'environ 20% d'hexachlorocyclotriphosphazène, le diphosphazène ayant d'ailleurs également tendance, s'il est trop chauffé, à se condenser avec libération de $POCl_3$ et formation de hauts polymères $[PNCl_2]_n$.

Il est également connu par le Brevet soviétique 176 416 aux noms de V.S. YAKUBOVICH, I.V. LEBEDOVA, A.Ya. YAKUBOVICH et N.I. SHVETSOV, Karpov Scientific Research Physical-Chemical Institute, déposé le 25 Mars 1963 et accordé le 2 Novembre 1965, de préparer des polychlorophosphazènes de formule $Cl_2(O)P[NPCl_2]_nCl$ à partir des polymères suivantes: $Cl(PNCl_2)_{10}POCl_2$ et $POCl_3(NPCl_2)_4$, par réaction avec du $SO_2$, ce qui signifie que l'on part de bas polymères, et en aucun cas du monomère, l'obtention du monomère étant au demeurant rendue impossible selon la procédure de ce Brevet soviétique, à partir du moment où l'on obtient un mélange de composés cycliques et linéaires à partir du $PCl_5$ et du $NH_4Cl$.

Il ressort de l'Art antérieur cité dans ce qui précède, que les diverses voies directes proposées ne permettent pas d'obtenir des polychlorophosphazènes linéaires, et ne permettent, au mieux, d'obtenir que des dimères ou des trimères linéaires dont les possibilités d'applications industrielles sont très réduites. La seule voie actuellement adoptée pour l'obtention de polychlorophosphazènes linéaires à chaîne longue est la voie indirecte, décrite en premier lieu ci-dessus,

de traitement de composés cycliques. Toutefois, le nombre important des opérations qu'elle requiert, dont le rendement est rarement quantitatif, et l'utilisation de quantités importantes de solvants coûteux, rendent son prix de revient prohibitif et pèsent lourdement sur le coût des polychlorophosphazènes obtenus. De plus, cette méthode ne permet d'obtenir que des polychlorophosphazènes à chaîne très longue, de l'ordre de 15 000 motifs $[NPCl_2]$ environ, et elle ne peut pas être contrôlée pour permettre d'obtenir des polychlorophosphazènes dont la longueur de chaîne peut être déterminée à volonté, et notamment des polychlorophosphazènes linéaires à chaîne courte ou moyenne, c'est-à-dire comportant de 4 à 1000 motifs ou plus, par exemple.

La présente invention s'est, en conséquence, donné pour but de pourvoir à un nouveau procédé de préparation de polychlorophosphazènes qui répond mieux aux nécessités de la pratique que les procédés proposés conformément à l'Art antérieur, notamment en ce qu'il constitue un procédé de synthèse simple, rapide et quantitatif qui permet d'abaisser considérablement le prix de revient des produits obtenus, en ce qu'il permet d'obtenir des polychlorophosphazènes par une voie directe, c'est-à-dire sans avoir recours à une transformation de polychlorophosphazènes cycliques, en ce qu'il permet d'obtenir des polymères dont on peut contrôler à volonté le degré de polymérisation en fonction des applications envisagées.

La présente invention a pour objet de nouveaux polychlorophosphazènes linéaires, caractérisés en ce qu'ils répondent à la formule I ci-après:

$$Cl_2(O)P[NPCl_2]_nCl \qquad (I)$$

dans laquelle n est supérieur à 20, la valeur de n pouvant être contrôlée à volonté pour permettre l'obtention de chaînes de toutes longueurs moyennes désirées, n pouvant être égal ou supérieur à 1000.

L'obtention de tels polymères est surprenante et inattendue, attendu que l'Art antérieur ne permettait d'obtenir que des polymères de formule I dans lesquels n = 2 ou 3 et par ailleurs des polymères ne comportant pas d'oxygène terminal, dans lesquels n est de l'ordre de 15 000, sans pouvoir obtenir de polymères intermédiaires.

L'avantage que procure la possibilité de contrôler à volonté la valeur de n est représenté par le fait que l'on peut conférer certaines propriétés physiques désirées aux polymères finalement obtenus, et faire varier ces propriétés dans une gamme étendue.

La présente invention a également pour objet un procédé de préparation des nouveaux polychlorophosphazènes linéaires à longue chaîne de formule I ci-dessus, lequel procédé est caractérisé en ce qu'on réalise la polycondensation par chauffage du P trichloro-N dichlorophosphoryl-monophosphazène de formule II ci-après:

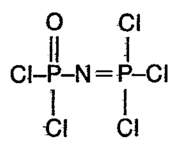

II

conformément à l'équation III ci-après:

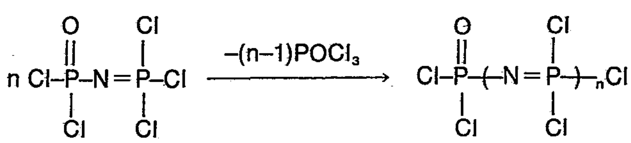


III

avec une libération contrôlée de $POCl_3$, pour obtenir quantitativement un polychlorophosphazène de formule I pratiquement pur, de degré de condensation contrôlé.

Selon un mode de réalisation avantageux du procédé qui fait l'objet de la présente invention, la polycondensation du P trichloro-N dichlorophosphoryl-monophosphazène est réalisé au moins en partie, à une température égale ou supérieure à 240 °C.

Selon un autre mode de réalisation avantageux du procédé qui fait l'objet de la présente invention, la polycondensation contrôlée du P trichloro-N dichlorophosphoryl-monophosphazène est réalisée au moins en partie à la pression atmosphérique.

Selon encore un autre mode de réalisation avantageux du procédé objet de la présente invention, la réaction de polycondensation contrôlée est poursuivie jusqu'à élimination pratiquement totale du $POCl_3$ théorique sans qu'il se produise de réactions de ramification.

Selon un autre mode de réalisation avantageux du procédé objet de la présente invention, la réaction de polycondensation contrôlée est effectuée par chauffage à une température égale ou supérieure à 240 °C, pendant une durée relativement brève, généralement inférieure à 8 heures.

Selon une disposition avantageuse du procédé objet de la présente invention, la polycondensation contrôlée du P trichloro-N dichlorophosphoryl-monophosphazène est réalisée à une pression supérieure à la pression atmosphérique, de l'ordre de 10 bars à plusieurs Kbars, de préférence.

Selon une autre disposition avantageuse du procédé objet de l'invention, on fait varier la pression au cours de la réaction de polycondensation, laquelle débute à la pression atmosphérique et est terminée sous une pression réduite, de l'ordre de 13 à 0,13 mbar, de préférence.

Selon encore une autre disposition avantageuse du procédé objet de l'invention, la réaction de polycondensation contrôlée débute à une pression supérieure à la pression atmosphérique, de l'ordre de 10 bars à plusieurs Kbars, de préférence, est poursuivie à la pression atmosphérique et est terminée sous une pression réduite, de l'ordre de 13 à 0,13 mbar, de préférence, la durée pendant laquelle est appliquée la pression supérieure à la pression atmosphérique représentant environ 10 à 15% de la durée totale de la réaction, la durée pendant laquelle la réaction de polycondensation se déroule à la pression atmosphérique représentant environ 70 à 80% de la durée totale de la réaction et la durée pour laquelle est appliquée la pression réduite représentant environ 10 à 15% de la durée totale de la réaction.

Également conformément à l'invention, la réaction de polycondensation contrôlée débute par un chauffage à une température de préférence comprise entre 280° et 350 °C, pendant une durée appropriée, de l'ordre de 10 à 25% de la durée totale de la réaction, puis la température de chauffage est progressivement abaissée jusqu'à 240 °C, température à laquelle elle est poursuivie jusqu'au terme de la réaction.

Selon une modalité d'exécution avantageuse du procédé objet de la présente invention, la réaction de polycondensation contrôlée est réalisée sous agitation.

Conformément à un mode de réalisation avantageux du procédé objet de l'invention, la réaction de polymérisation contrôlée est réalisée, au moins en partie, en atmosphère de gaz inerte tel que de l'azote anhydre, en particulier, ce qui favorise le départ du $POCl_3$ et réduit, de ce fait, la durée de la réaction.

Le degré de condensation obtenu est fonction de différents paramètres, et notamment des températures mises en œuvre, des durées de chauffage, du volume traité, des pressions mises en œuvre, des conditions de la réaction, telles qu'agitation, atmosphère dans laquelle se déroule la réaction, etc..., lesquels paramètres peuvent être programmés en vue de l'obtention du résultat optimal recherché.

Selon une autre modalité d'exécution avantageuse du procédé objet de l'invention, on purifie le produit de la réaction de polycondensation en le traitant par un solvant des phosphazènes cycliques, en même temps solvant des polychlorophosphazènes linéaires à chaîne courte (où n est inférieur à 4 ou 5), tel que l'éther de pétrole par exemple.

Le procédé conforme à l'invention permet d'obtenir des polychlorophosphazènes linéaires de formule I, présentant un très faible pourcentage d'impuretés, toujours inférieur à 5%, qui sont éliminées par le traitement de purification ci-dessus. Ces impuretés sont constituées par des polychlorophosphazènes cycliques et des polyphosphazènes linéaires à chaîne courte: les 95% de produit qui précipitent au cours de ce traitement de purification ont été identifiés comme étant des hauts polymères de chlorophosphazène, de formule I, par les méthodes suivantes:

– Le spectre IR des polychlorophosphazènes obtenus conformément à l'invention, et qui est représenté à la figure 1 annexée, présente:

– une absorption intense et large dans la région de 1300 $cm^{-1}$ caractéristique de l'élongation de la liaison P = N (résolue dans le cas de films minces en deux composantes à 1310 et 1240 $cm^{-1}$);

– deux absorptions d'intensité moyenne à 755 et 470 $cm^{-1}$ caractéristiques respectivement de la déformation des ponts N–P–N et P–N–P;

– deux absorptions d'intensité forte à 585 $cm^{-1}$ et moyenne à 535 $cm^{-1}$ relatives aux élongations de la liaison P–Cl. [Ces attributions sont faites par comparaison avec les travaux de MANLEY et WILLIAMS (Polymer, 1969, 10, 307), concernant le haut polymère $(NPCl_2)_n$];

– une raie fine vers 680 $cm^{-1}$ correspondant à du benzène résiduel (le benzène étant le solvant des polychlorophosphazènes linéaires).

– Le spectre RMN du Phosphore 31 représenté à la figure 2 annexée présente un pic à + 18,8 ppm/$H_3PO_4$ 85% en accord avec les résultats de ALLCOCK et Coll. (Inorg. Chem. 1965, 5, 1709).

– Le spectre UV confirme par son absorption dans la région de 370 nm la formation de phosphazènes linéaires.

– La chromatographie sur couche mince du produit brut de réaction, faite selon les indications de NOVOBILSKY et Coll. [Z. Anorg. Allg. Chem. 1975, 416, 187 et 1976, 423, 273] met en évidence la quasi-inexistence de phosphazènes cycliques.

Les mesures de température de transition vitreuse, réalisées par analyse enthalpique différentielle sur des polymères de longueurs différentes, se situent toutes au voisinage de –60 °C, le nombre de motifs élémentaires semblant n'avoir qu'une influence très faible sur cette dernière.

Outre les dispositions qui précèdent, l'invention comprend encore d'autres dispositions, qui ressortiront de la description qui va suivre.

L'invention vise plus particulièrement les polychlorophosphazènes linéaires conformes à l'invention, les procédés de préparation de ces polymères conformément aux dispositions qui précèdent, ainsi que les moyens mis en œuvre pour la préparation de ces polymères linéaires, les procédés d'ensemble dans lesquels sont inclus lesdits procédés et les produits réalisés à l'aide de polychlorophosphazènes linéaires à longue chaîne conformes à l'invention.

L'invention sera mieux comprise à l'aide du complément de description qui va suivre, qui se réfère à des exemples de mise en œuvre du procédé objet de la présente invention.

Il doit être bien entendu, toutefois, que ces exemples de mise en œuvre sont donnés uniquement à titre d'illustration de l'objet de l'invention, dont ils ne constituent en aucune manière une limitation.

EXEMPLE 1

1. Préparation du P trichloro-N dichlorophosphoryl-monophosphazène

Le P trichloro-N dichlorophosphoryl-monophosphazène de formule II ci-dessus est obtenu aisément en mettant en œuvre la méthode mise au point par EMSLEY et UDY [J. Chem. Soc. (A) 1971, 2863] qui font réagir le $PCl_5$ sur $(NH_4)_2SO_4$ dans le tétrachloréthane symétrique ou le chlorobenzène à leur température d'ébulltion, en procédant comme suit:

A – On prépare le $P_2NOCl_5$ dans du tétrachloréthane symétrique, à partir de 25,43 g de $PCl_5$ et de 3,59 g de $(NH_4)_2SO_4$, dans 55 ml de sym. $C_2H_2Cl_4$. La réaction dure une heure, à 146 °C et permet d'obtenir 14,55 g de $P_2NOCl_5$.

B – En variante, on prépare le $P_2NOCl_5$ dans le chlorobenzène à 132 °C, à partir de 28,82 g de $PCl_5$ et 4,07 g de $(NH_4)_2SO_4$, dans 62 ml de $C_6H_5Cl$. La réaction dure 2 heures au bout desquelles on recueille 14,55 g de $P_2NOCl_5$ cristallisé pur.

2. Préparation d'un polymère $Cl_2(O)P[NPCl_2]_nCl$

14,55 g de $P_2NOCl_5$ obtenus et décrits en 1. ci-dessus sont chauffés à 240 °C pendant 8 heures, à la pression atmosphérique. On obtient ainsi un polymère $Cl_2(O)P[NPCl_2]_nCl$ de masse moléculaire moyenne égale à 3500 (déterminée par osmométrie à tension de vapeur), ce qui correspond à $n \simeq 29$.

Il y a libération de $POCl_3$ au cours de la réaction et si on calcule la perte en $POCl_3$ correspondant à un polymère de masse moléculaire 3500, on trouve 8,0 g.

Il y a lieu de remarquer que le procédé conforme à l'invention permet de récupérer quantitativement le phosphore du $P_2NOCl_5$ en partie sous forme de polymère, et en partie sous forme de $POCl_3$ spectroscopiquement pur (ainsi que cela ressort de la figure 3 annexée).

EXEMPLE II

On chauffe 20,82 g de $P_2NOCl_5$ (obtenu et décrit à l'Exemple I 1. ci-dessus) pendant 8 h 30, à une température de 280 °C, en maintenant une agitation modérée pendant toute la durée du chauffage.

On a établi la courbe volume % de $POCl_3$ recueilli en fonction du temps (100% correspondant à l'élimination totale): cf. figure 4.

La masse totale de $POCl_3$ recueillie est de 160 g ramenée à 1 mole de $P_2NOCl_5$ au départ. L'écart par rapport à 153,5 g (masse de 1 mole de $POCl_3$ correspondant à l'obtention de $(NPCl_2)_n$) est dû à la distillation d'un peu de $P_2NOCl_5$. Ceci prouve que lorsque l'expérience est poussée à son terme, la mesure du volume de $POCl_3$ ne suffit pas pour déterminer le nombre de motifs. Le produit brut obtenu, totalement incolore, est entièrement soluble dans le benzène, ce qui prouve l'absence de polychlorophosphazènes ramifiés.

Les résultats de l'analyse du produit sont les suivants:

| | | | |
|---|---|---|---|
| théor. pour $(NPCl_2)_n$ | Cl 61,21%; | N 12,07%; | P 26,72% |
| trouvé | Cl 61,52%; | N 11,90%; | P 26,81% |

Ce produit a été traité par l'éther de pétrole à 40–60 °C, qui est un précipitant des hauts polymères $(NPCl_2)_n$ et un solvant des phosphazènes cycliques, ainsi que des pohsphazènes du type $Cl_2(O)P–(NPCl_2)–_nCl$ où n est petit. On solubilise ainsi une fraction représentant 5% en poids du produit traité.

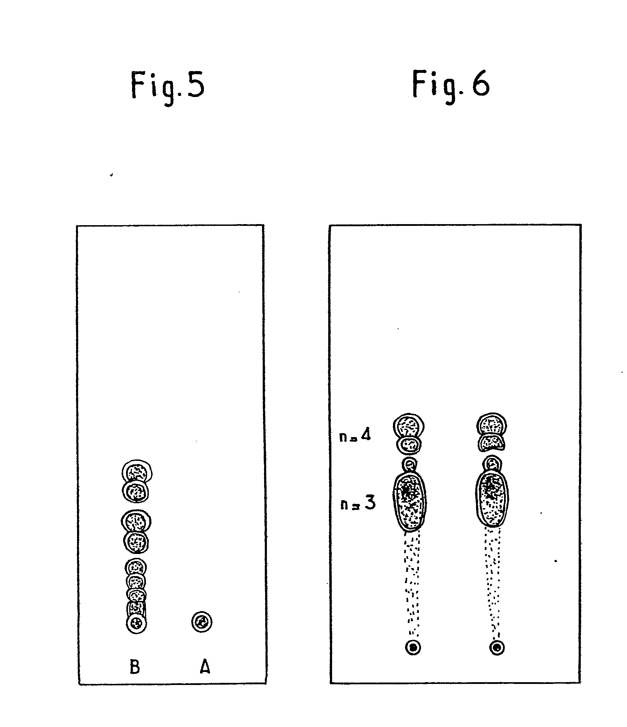

Un contrôle chromatographique (chromatographie couche mince sur plaque de silice – Eluant: hexane) de la fraction insoluble prouve l'absence de $P_2NOCl_5$ résiduel, ainsi que de phosphazènes cycliques (cf. plaque chromatographique située à la figure 5 – tache A – qui est à comparer avec la plaque chromatographique représentée à la figure 6 qui motre les taches qui représentent des polychlorophosphazènes cycliques). Une détermination de la masse moléculaire moyenne réalisée à l'aide d'un osmomètre à tension de vapeur Knauer montre que celle-ci est supérieure à 20 000.

En ce qui concerne la phase soluble, un contrôle chromatographique (voir plaque représentée à la figure 5 – tache B –) montre l'existence d'une série de composés de Rf très voisins: il ne peut s'agir que de phosphazènes cycliques ou linéaires du type $Cl_2(O)P–[NPCl_2]_nCl$.

Le spectre I.R. de cette phase, ainsi que le spectre RMN $P^{31}$ du produit brut (qui permet de conclure à l'absence de $[NPCl_2]_3$ et $[NPCl_2]_4$) sont en faveur de la deuxième hypothèse.

Le spectre RMN $P^{31}$ de cette phase soluble permet d'affirmer que la quantité de phosphazènes cycliques $[NPCl_2]_n$ avec $3 \leqslant n \leqslant 6$ dans le produit brut est pratiquement négligeable. Il a été vérifié que le poids moléculaire moyen du polymère obtenu est de l'ordre de 28 000 à 29 000, n moyen étant de l'ordre de 240 à 245.

Il résulte de la description qui précède que l'on obtient, conformément à la présente invention, des polychlorophosphazènes linéaires à longue chaîne qui présentent de nombreuses possibilités d'applications industrielles aussi bien en eux-mêmes, comme indiqué plus haut, qu'en tant que matières de départ pour la préparation de polyorganophosphazènes à l'aide de réactions de substitutions des types suivants:

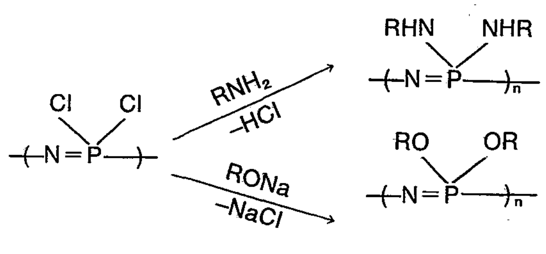


qui ont permis d'obtenir les polymères suivants: $[NP(OMe)_2]_n$; $[NP(OCH_2CF_3)_2]_n$; $[NP(OCH_2C_3F_7)_2]_n$; $[NP(OCH_2CF_3)\ (OCH_2C_3F_7)]_n$; $[NP(OCH_2C_3F_7)_2]_n$, etc..., dont les propriétés sont remarquables, en particulier pour $[NP(OCH_2CF_3)\ (OCH_2C_3F_7)]_n$ qui est un élastomère amorphe résistant à l'hydrolyse, à la chaleur, ainsi qu'à la plupart des solvants et produits chimiques, et qui sont utilisables dans l'industrie en tant qu'élastomères, matières thermoplastiques, éventuellement souples, aptes à fournir des films, et en tant que produits de remplacement de verre. L'invention procure, en outre, l'avantage de pourvoir à un procédé d'obtention de polychlorophosphazènes linéaires à longue chaîne, relativement peu onéreux puisque son prix de revient est dix fois moindre que celui du procédé utilisé actuellement à l'échelle industrielle, de traitement des chlorophosphazènes cycliques, le procédé conforme à l'invention présentant, en outre, l'avantage de constituer une méthode de polymérisation simple, rapide et quantitative.

Ainsi que cela ressort de ce qui précède, l'invention ne se limite nullement à ceux de ses modes de mise en œuvre, de réalisation et d'application qui viennent d'être décrits de façon plus explicite; elle en embrasse, au contraire, toutes les variantes qui peuvent venir à l'esprit du technicien en la matière, sans s'écarter du cadre, ni de la portée, de la présente invention.

**Revendications**

1. Procédé de préparation de nouveaux polychlorophosphazènes linéaires de formule I ci-après:

$$Cl_2(O)P[NPCl_2]_nCl \qquad I$$

lequel procédé est caractérisé en ce que l'on réalise la polycondensation par chauffage du P trichloro-N dichlorophosphoryl-monophosphazène de formule II ci-après:

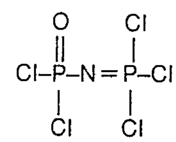

II

conformément à l'équation III ci-après:

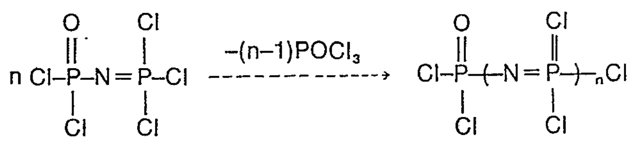


III

avec une libération contrôlée de $POCl_3$, pour obtenir quantitativement un polychlorophosphazène de formule I pratiquement pur, de degré de condensation contrôlé.

2. Procédé selon la Revendication 1, caractérisé en ce que la polycondensation contrôlée du P trichloro-N dichlorophosphoryl-monophosphazène est réalisée à une température égale ou supérieure à 240 °C.

3. Procédé selon l'une quelconque des Revendications 1 et 2, caractérisé en ce que la polycondensation contrôlée du P trichloro-N dichlorophosphoryl-monophosphazène est réalisée au moins en partie à la pression atmosphérique.

4. Procédé selon l'une quelconque des Revendications 1 à 3, caractérisé en ce que la réaction de polycondensation contrôlée est poursuivie jusqu'à élimination pratiquement totale du $POCl_3$ théorique sans qu'il se produise de réactions de ramification.

5. Procédé selon l'une quelconque des Revendications 1 à 4, caractérisé en ce que la réaction de polycondensation contrôlée est effectuée par chauffage à une température égale ou supérieure à 240 °C, pendant une durée inférieure à 8 heures.

6. Procédé selon l'une quelconque des Revendications 1 à 5, caractérisé en ce que la polycondensation contrôlée du P trichloro-N dichlorophosphoryl-monophosphazène est réalisée à une pression supérieure à la pression atmosphérique, de l'ordre de 10 bars à plusieurs Kbars, de préférence.

7. Procédé selon l'une quelconque des Revendications 1 à 5, caractérisé en ce qu'on fait varier la pression au cours de la réaction de polycondensation, laquelle débute à la pression atmosphérique et est terminée sous pression réduite, de l'ordre de 10 à 0,1 mm Hg, de préférence.

8. Procédé selon l'une quelconque des Revendications 1 à 5, caractérisé en ce que la réaction de polycondensation contrôlée débute à une pression supérieure à la pression atmosphérique, de l'ordre de 10 bars à plusieurs Kbars de préférence, est poursuivie à la pression atmosphérique, et est terminée sous une pression réduite, de l'ordre de 10 à 0,1 mm Hg, de préférence, la durée pendant laquelle est appliquée la pression supérieure à la pression atmosphérique représentant 10 à 15% de la durée totale de la réaction, la durée pendant laquelle la réaction de polycondensation se déroule à la pression atmosphérique représentant 70 à 80% de la durée totale de la réaction, et la durée pendant laquelle est appliquée la pression réduite représentant 10 à 15% de la durée totale de la réaction.

9. Procédé selon l'une quelconque des Revendications 1 à 8, caractérisé en ce que la réaction de polycondensation contrôlée débute par un chauffage à une température de préférence comprise entre 280 °C et 350 °C, pendant une durée qui est de l'ordre de 10 à 25% de la durée totale de la réaction, puis la température de chauffage est progressivement abaissée jusqu'à 240 °C, température à laquelle elle est poursuivie jusqu'au terme de la réaction.

10. Procédé selon l'une quelconque des Revendications 1 à 9, caractérisé en ce que la réaction de polycondensation contrôlée est réalisée sous agitation.

11. Procédé selon l'une quelconque des Revendications 5, 9 ou 10, caractérisé en ce que la réaction de polycondensation contrôlée est réalisée au moins en partie en atmosphère de gaz inerte.

12. Procédé selon l'une quelconque des Revendications 1 à 11, caractérisé en ce qu'on purifie le

produit de la réaction de polycondensation en le traitant par un solvant des polychlorophosphazènes cycliques, en même temps solvant des polychlorophosphazènes linéaires à chaîne courte.

13. Polychlorophosphazènes linéaires qui répondent à la formule I ci-après:

$$Cl_2(O)P[NPCl_2]_nCl$$

caractérisés en ce que dans cette formule n est supérieur à 20, la valeur de n étant contrôlable à volonté pour permettre la production de chaînes de n'importe quelle longueur désirée dans l'ordre des poids moléculaires moyens, et en ce que lesdits polychlorophosphazènes linéaires sont substantiellement dépourvus d'analogues cycliques et d'autres impuretés.

14. Utilisation des polychlorophosphazènes linéaires selon la Revendication 13, obtenus en mettant en œuvre le procédé selon l'une quelconque des Revendications 1 à 12, en tant qu'intermédiaires pour la préparation, à l'aide de réactions de substitution connues en elles-mêmes, de polyorganophosphazènes du type:

– des polyalcoxy- et des polyaryloxyphosphazènes de formule générale:

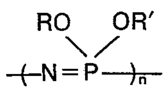

où R et R', qui peuvent être identiques ou différents, représentent des groupes alkyle inférieur, phényle, phényle substitués par un groupe alkyle inférieur ou par un atome d'halogène, ou des groupes $(\varnothing CH_2CF_3)$, $(\varnothing CH_2C_2F_5)$, $(\varnothing CH_2CF_2CF_2H)$, $(\varnothing CH_2C_3F_7)$ et où n a la même signification que dans la Revendication 1,

– des polyaminophosphazènes de formules générales:

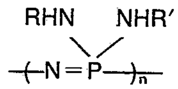

ou

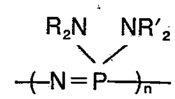

où R et R', qui peuvent être identiques ou différents, représentent des groupes alkyle inférieur, phényle ou phényle substitués par un halogène ou par un groupe alkyle inférieur, et où n a la même signification que dans la Revendication 1.

## Claims

1. A process for the preparation of new linear polychlorophosphazenes of the formula I below:

$$Cl_2(O)P[NPCl_2]_nCl \qquad I$$

which process is characterized in that the polycondensation of P-trichloro-N-dichlorophosphorylmonophosphazene of the formula II below:

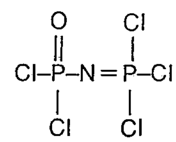

II

in accordance with the equation III below:

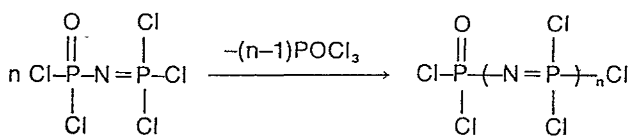


III

is effected by heating, with a controlled release of $POCl_3$, to give a quantitative yield of a virtually pure polychlorophosphazene of the formula I with a controlled degree of condensation.

2. The process according to Claim 1, characterized in that the controlled polycondensation of the P-trichloro-N-dichlorophosphorylmonophosphazene is effected at a temperature equal to or greater than 240 °C.

3. The process according to either one of Claims 1 and 2, characterized in that at least part of the controlled polycondensation of the P-trichloro-N-dichlorophosphorylmonophosphazene is effected at atmospheric pressure.

4. The process according to any one of Claims 1 to 3, characterized in that the controlled polycondensation reaction is continued until virtually all the theoretical quantity of $POCl_3$ has been eliminated, without branching reactions taking place.

5. The process according to any one of Claims 1 to 4, characterized in that the controlled polycondensation reaction is effected by heating at a temperature equal to or greater than 240 °C, for a period of less than 8 hours.

6. The process according to any one of Claims 1 to 5, characterized in that the controlled polycondensation of the P-trichloro-N-dichlorophosphorylmonophosphazene is effected at a pressure above atmospheric pressure, preferably of the order of 10 bar to several Kbar.

7. The process according to any one of Claims 1 to 5, characterized in that the pressure is varied during the polycondensation reaction, which starts at atmospheric pressure and is completed under a reduced pressure, preferably of the order of 10 to 0.1 mm Hg.

8. The process according to any one of Claims 1 to 5, characterized in that the controlled polycondensation reaction starts at a pressure above atmospheric pressure, preferably of the order of 10 bar to several Kbar, is continued at atmospheric pressure and is completed under a reduced pressure, preferably of the order of 10 to 0.1 mm

Hg, the period during which the pressure above atmospheric pressure is applied representing 10 to 15% of the total reaction time, the period during which the polycondensation reaction proceeds at atmospheric pressure representing 70 to 80% of the total reaction time, and the period during which the reduced pressure is applied representing 10 to 15% of the total reaction time.

9. The process according to any one of Claims 1 to 8, characterized in that the controlled polycondensation reaction starts with heating to a temperature preferably of between 280 °C and 350 °C, for a period which is of the order of 10 to 25% of the total reaction time, and then the heating temperature is gradually lowered to 240 °C, at which temperature the reaction is continued to completion.

10. The process according to any one of Claims 1 to 9, characterized in that the controlled polycondensation reaction is effected with stirring.

11. The process according to any one of Claims 5, 9 or 10, characterized in that at least part of the controlled polycondensation reaction is effected in an inert gas atmosphere.

12. The process according to any one of Claims 1 to 11, characterized in that the product of the polycondensation reaction is purified by treatment with a solvent for the cyclic polychlorophosphazenes, which at the same time is a solvent for the short-chain linear polychlorophosphazenes.

13. Linear polychlorophosphazenes which correspond to the formula I below:

$$Cl_2(O)P[NPCl_2]_nCl,$$

characterized in that, in this formula, n is greater than 20, the value of n being controllable at will to permit the production of chains of any desired length in the sequence of average molecular weights, and in that the said linear polychlorophosphazenes are substantially devoid of cyclic analogues and other impurities.

14. Use of the linear polychlorophosphazenes according to Claim 13, obtained by carrying out the process according to any one of Claims 1 to 12, as intermediates for the preparation, by means of substitution reactions known per se, of polyorganophosphazenes of the following types:

– the polyalkoxyphosphazenes and polyaryloxyphosphazenes of the general formula:

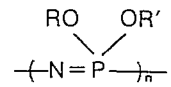

in which R and R′, which can be identical or different, represent lower alkyl groups, phenyl groups, phenyl groups substituted by a lower alkyl group or by a halogen atom, or groups ($\varnothing CH_2CF_3$), ($\varnothing CH_2C_2F_5$), ($\varnothing CH_2CF_2CF_2H$) or ($\varnothing CH_2C_3F_7$), and in which n has the same meaning as in Claim 1, and

– the polyaminophosphazenes of the general formulae:

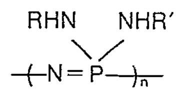

or

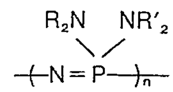

in which R and R′, which can be identical or different, represent lower alkyl groups, phenyl groups or phenyl groups substituted by a halogen of by a lower alkyl group, and in which n has the same meaning as in Claim 1.

**Patentansprüche**

1. Verfahren zur Herstellung von neuen linearen Polychlorphosphazenen der nachstehenden Formel I,

$$Cl_2(O)P[NPCl_2]_nCl$$

wobei das Verfahren dadurch gekennzeichnet ist, dass man die Polykondensation durchführt durch Erwärmen von P-Trichlor-N-dichlorphosphoryl-monophosphazen der nachfolgenden Formel II,

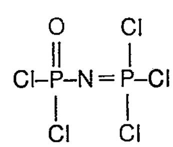

II

entsprechend der nachstehenden Gleichung III,

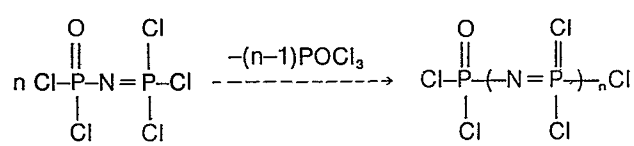


III

unter gesteuerter Freisetzung von $POCl_3$, zur quantitativen Erzielung eines praktisch reinen Polychlorphosphazenes der Formel I, mit gesteuertem Kondensationsgrad.

2. Verfahren nach Anspruch 1, dadurch gekennzeichnet, dass die gesteuerte Polykondensation von P-Trichlor-N-dichlorphosphoryl-monophosphazen bei einer Temperatur gleich oder über 240 °C durchgeführt wird.

3. Verfahren nach einem der Ansprüche 1 und 2, dadurch gekennzeichnet, dass die gesteuerte Polykondensation von P-Trichlor-N-dichlorphosphoryl-monophosphazen zumindest teilweise bei Atmosphärendruck durchgeführt wird.

4. Verfahren nach einem der Ansprüche 1 bis 3, dadurch gekennzeichnet, dass die gesteuerte Polykondensation bis zur praktisch vollständigen theoretischen Entfernung von $POCl_3$ durchgeführt

wird, ohne dass Vernetzungsreaktionen auftreten.

5. Verfahren nach einem der Ansprüche 1 bis 4, dadurch gekennzeichnet, dass die gesteuerte Polykondensationsreaktion durch Erwärmen auf eine Temperatur gleich oder über 240 °C, während einer Dauer unter 8 Stunden durchgeführt wird.

6. Verfahren nach einem der Ansprüche 1 bis 5, dadurch gekennzeichnet, dass die gesteuerte Polykondensation von P-Trichlor-N-dichlorphosphoryl-monophosphazen bei einem Druck über dem Atmosphärendruck, vorzugsweise in der Grössenordnung von 10 bar bis zu mehreren Kbar durchgeführt wird.

7. Verfahren nach einem der Ansprüche 1 bis 5, dadurch gekennzeichnet, dass man den Druck im Verlauf der Polykondensationsreaktion variiert, wobei diese bei Atmosphärendurck beginnt und unter verringertem Druck, vorzugsweise in der Grössenordnung von 10 bis 0,1 mm Hg beendet wird.

8. Verfahren nach einem der Ansprüche 1 bis 5, dadurch gekennzeichnet, dass die gesteuerte Polykondensationsreaktion bei einem Druck über dem Atmosphärendruck, vorzugsweise in der Grössenordnung von 10 bar bis zu mehreren Kbar begonnen, bei Atmosphärendruck weitergeführt und unter einem verringerten Druck, vorzugsweise in der Grössenordnung von 10 bis 0,1 mm Hg beendet wird, wobei die Dauer, während der der Überdruck über den Atmosphärendruck angelegt wird, 10 bis 15% der Gesamtdauer der Reaktion beträgt, die Dauer während der die Polykondensationsreaktion bei Atmosphärendruck abläuft, 70 bis 80% der Gesamtdauer der Reaktion beträgt, und die Dauer, während der der verringerte Druck angelegt wird, 10 bis 15% der Gesamtdauer der Reaktion beträgt.

9. Verfahren nach einem der Ansprüche 1 bis 8, dadurch gekennzeichnet, dass die gesteuerte Polykondensationsreaktion mit einer Erwärmung auf eine Temperatur vorzugsweise von 280 bis 350 °C während einer Dauer in der Grössenordnung von 10 bis 25% der Gesamtdauer der Reaktion begonnen wird, dann die Erwärmungstemperatur allmählich bis auf 240 °C, die Temperatur bei der sie bis zur Beendigung der Reaktion durchgeführt wird, erniedrigt wird.

10. Verfahren nach einem der Ansprüche 1 bis 9, dadurch gekennzeichnet, dass die gesteuerte Polykondensationsreaktion unter Bewegen durchgeführt wird.

11. Verfahren nach einem der Ansprüche 5, 9 oder 10, dadurch gekennzeichnet, dass die gesteuerte Polykondensationsreaktion zumindest teilweise in einer inerten Gasatmosphäre durchgeführt wird.

12. Verfahren nach einem der Ansprüche 1 bis 11, dadurch gekennzeichnet, dass man das Reaktionsprodukt der Polykondensation reinigt, durch Behandeln mit einem Lösungsmittel für die cyclischen Polychlorphosphazene, das gleichzeitig ein Lösungsmittel für die linearen Polychlorphosphazene mit kurzer Kette ist.

13. Lineare Polychlorphosphazene, die der nachstehenden Formel I entsprechen:

$$Cl_2(O)P[NPCl_2]_nCl$$

dadurch gekennzeichnet, dass in dieser Formel n über 20 ist, wobei der Wert von n freiwillig steuerbar ist, um die Erzeugung von Ketten mit beliebiger gewünschter Kette in der Grössenordnung von mittleren Molekulargewichten zu ermöglichen und dass diese linearen Polychlorphosphazene im wesentlichen keine cyclischen Analogen und andere Verunreinigungen enthalten.

14. Verwendung der linearen Polychlorphosphazene nach Anspruch 13, die dadurch erhalten wurden, dass man das Verfahren nach einem der Ansprüche 1 bis 12 durchführt, als Zwischenprodukte, unter Anwendung von an sich bekannten Substitutionsreaktionen zur Herstellung von Polyorganophosphazenen des Typs:

– Polyalkoxy- und Polyaryloxyphosphazene der allgemeinen Formel

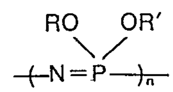

worin R und R′, die gleich oder verschieden sein können, niedrige Alkylgruppen, Phenyl, Phenyl, substituiert mit einer niedrigen Alkylgruppe oder mit einem Halogenatom, oder Gruppen ($ØCH_2CF_3$), ($ØCH_2C_2F_5$), ($ØCH_2CF_2CF_2H$), ($ØCH_2C_3F_7$), bedeuten, und n die gleiche Bedeutung wie in Anspruch 1 angegeben hat,

– Poylaminophosphazene der allgemeinen Formeln

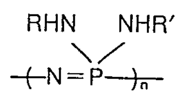

oder

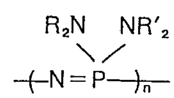

worin R und R′, die gleich oder verschieden sein können, niedrige Alkylgruppen, Phenyl oder Phenyl, substituiert mit einem Halogen oder mit einer niedrigen Alkylgruppe bedeuten, und worin n die gleiche Bedeutung wie in Anspruch 1 hat.

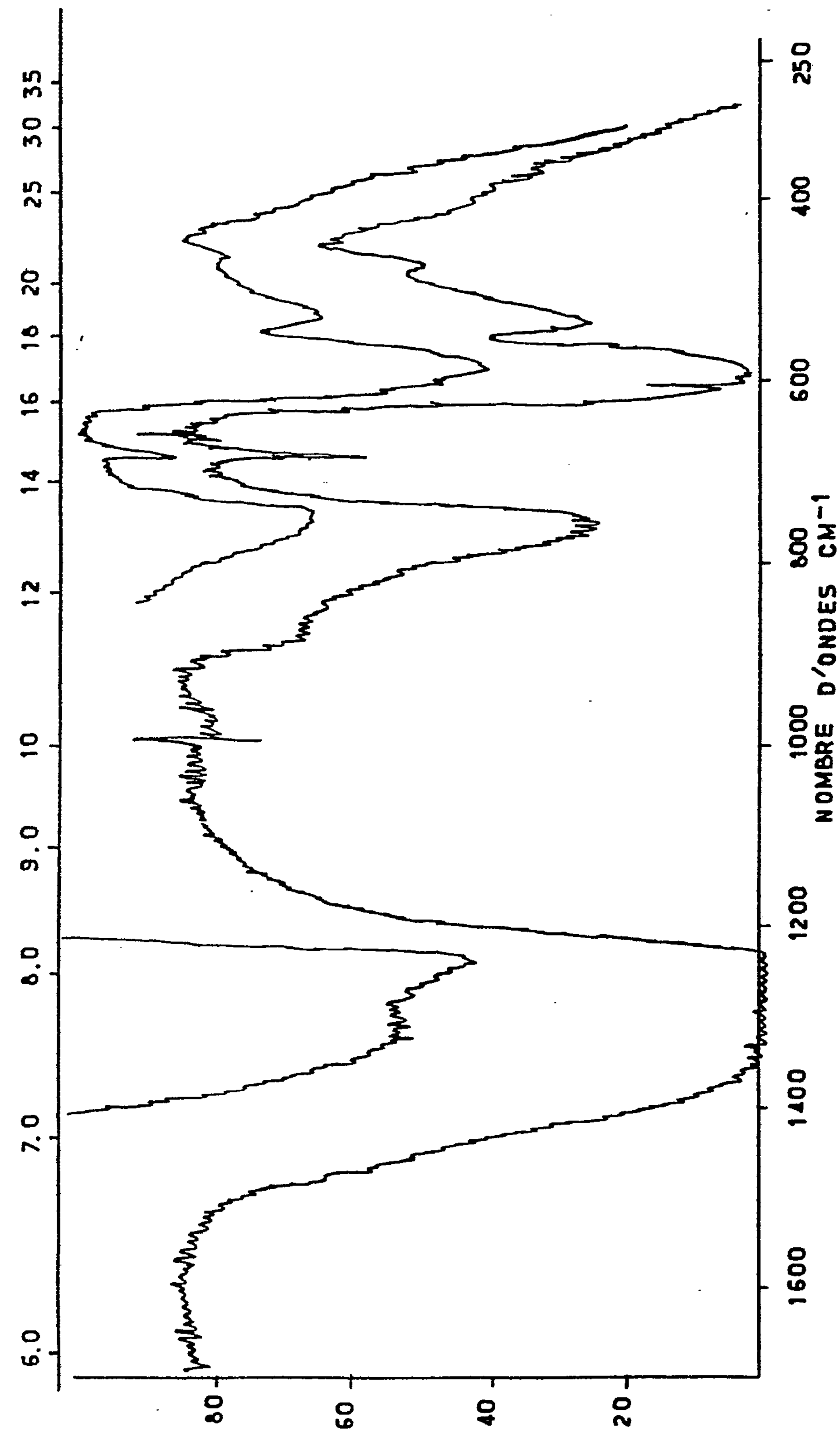
6.0
7.0
8.0
9.0
10
12
14
16
18
20
25
30
35
80
60
40
20
1600
1400
1200
1000
800
600
400
250
NOMBRE D'ONDES CM-1

Fig. 1

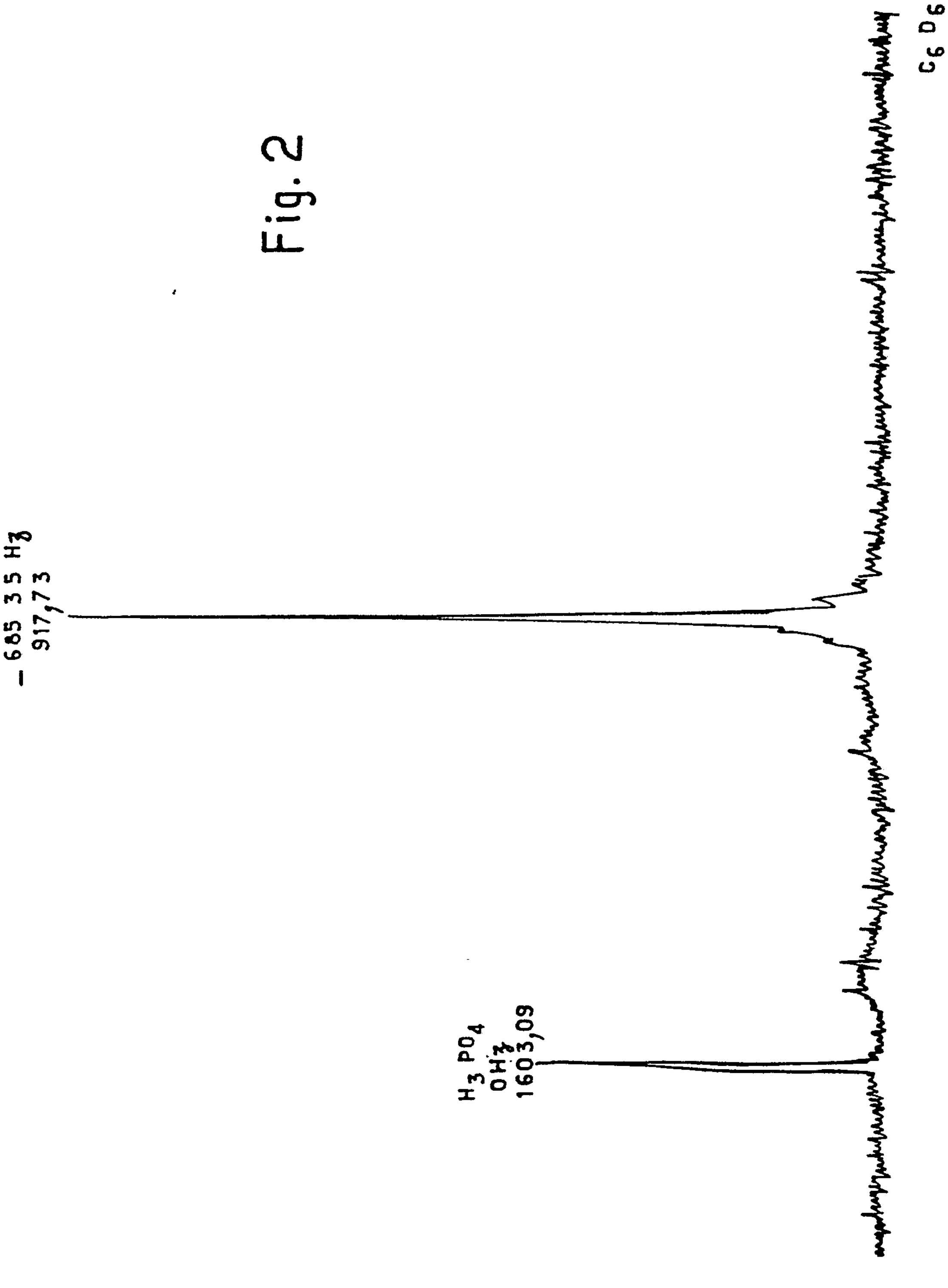


Fig. 2

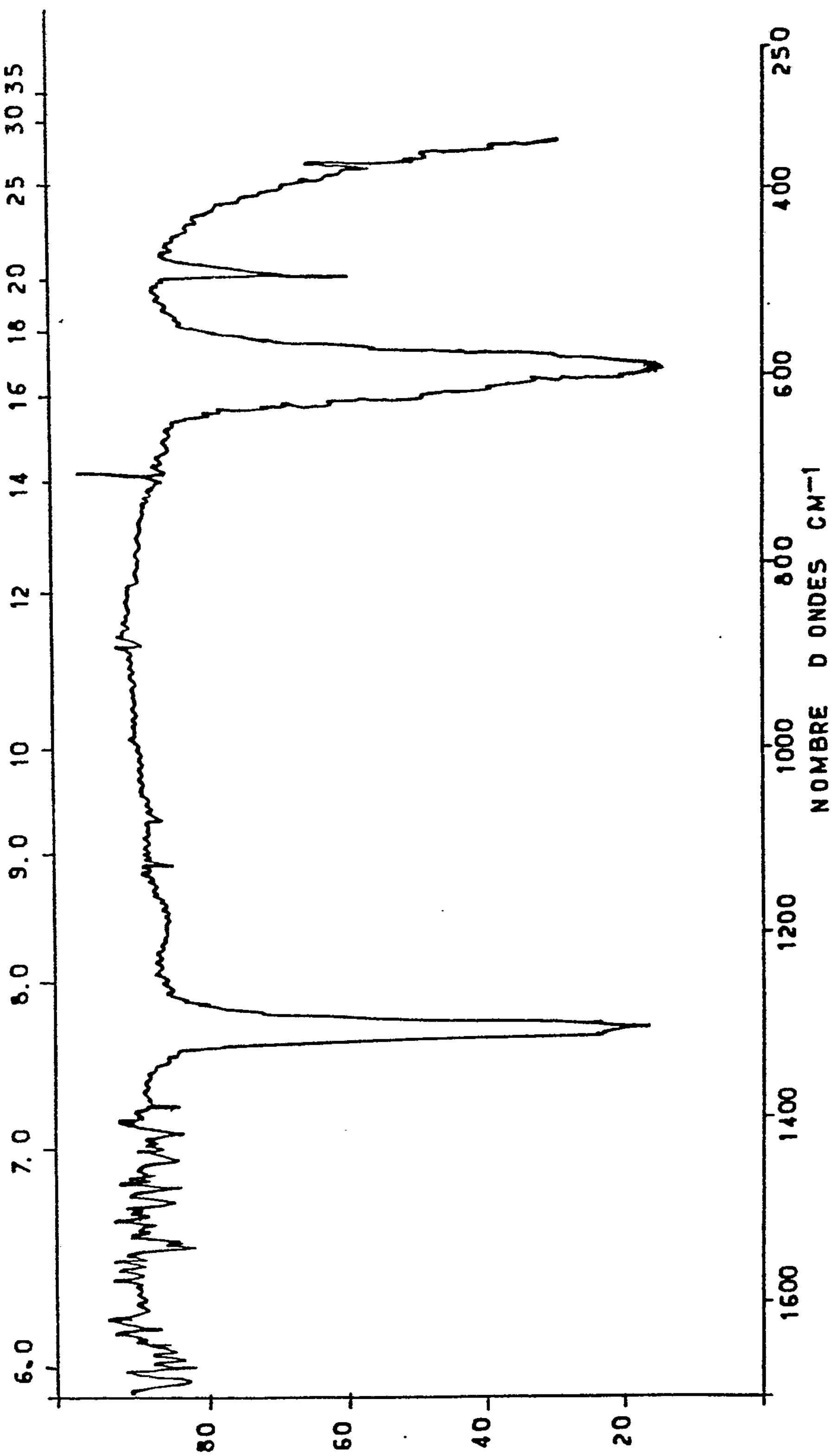
6.0
7.0
8.0
9.0
10
12
14
16
18
20
25
30 35
80
60
40
20
1600
1400
1200
1000
800
600
400
250
NOMBRE D ONDES CM⁻¹

Fig. 3

Fig. 4

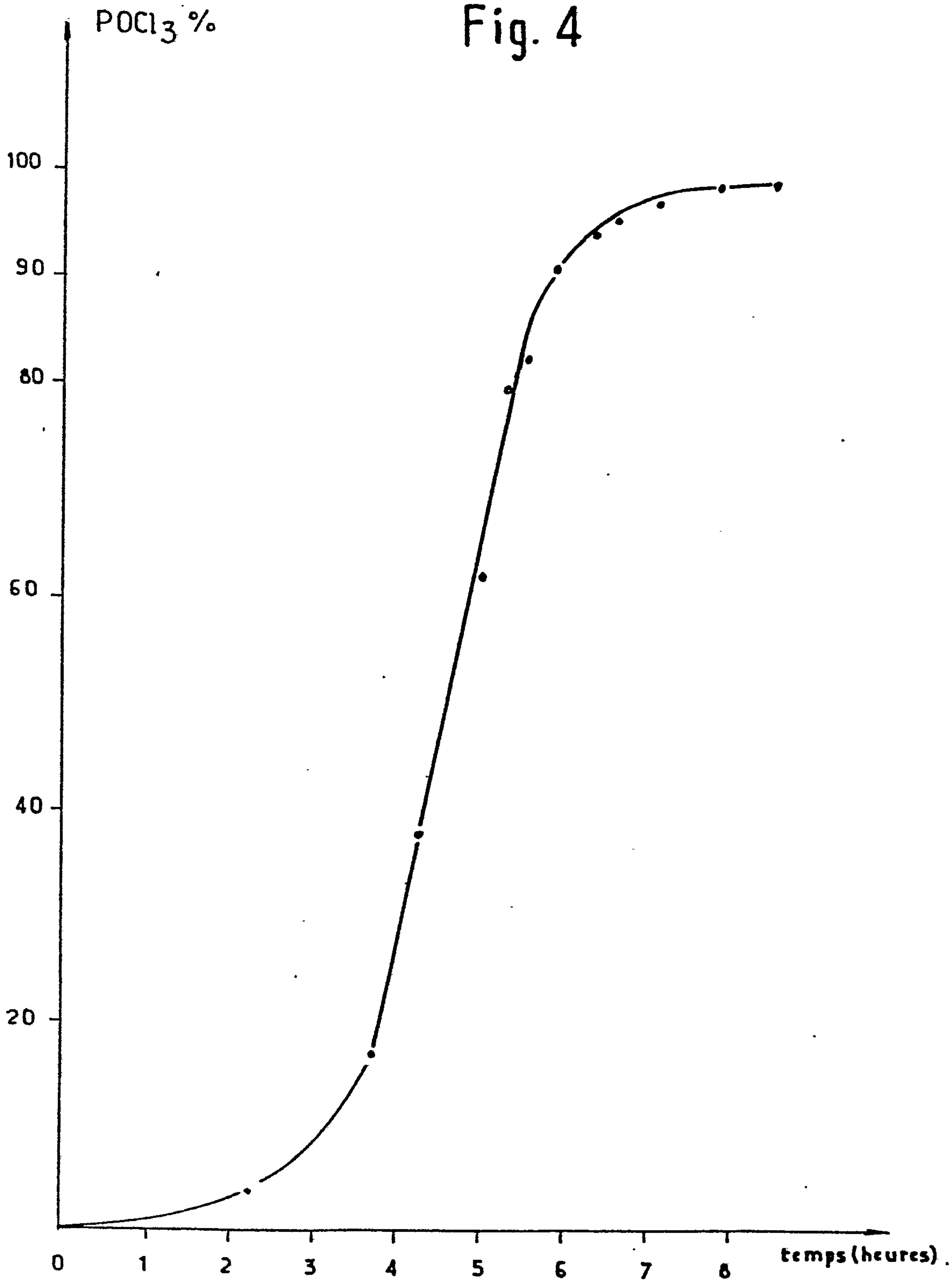

Fig.5

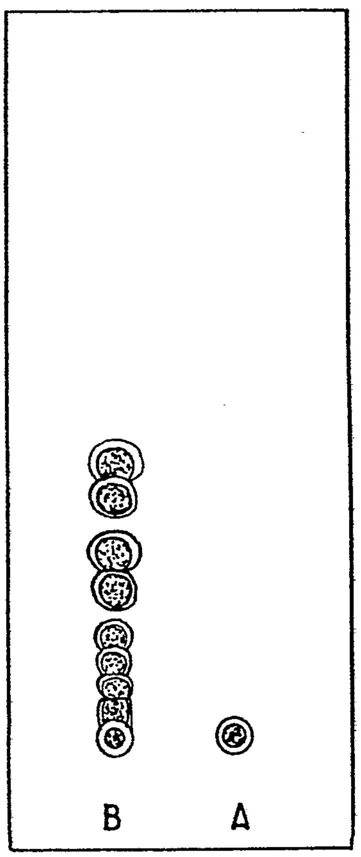


Fig.6